(19) Europäisches Patentamt
European Patent Office
Office européen des brevets

(11) Veröffentlichungsnummer: **0 468 324 A1**

# (12) EUROPÄISCHE PATENTANMELDUNG

(21) Anmeldenummer: **91111712.5**

(51) Int. Cl.[5]: **C08F 230/02**, C08F 222/06

(22) Anmeldetag: **13.07.91**

(30) Priorität: **27.07.90 DE 4023818**

(43) Veröffentlichungstag der Anmeldung:
**29.01.92 Patentblatt 92/05**

(84) Benannte Vertragsstaaten:
**DE FR GB IT**

(71) Anmelder: **BAYER AG**

**W-5090 Leverkusen 1 Bayerwerk(DE)**

(72) Erfinder: **Lindner, Christian, Dr.**
**Im Wasserblech 11**
**W-5000 Köln 80(DE)**
Erfinder: **Korte, Siegfried, Dr.**
**Engstenbergerhöhe 3**
**W-5068 Odenthal(DE)**

## (54) Phosphorhaltige Polymerisate.

(57) Copolymerisate aus
a) Phosphonsäurederivaten der Formel (I)

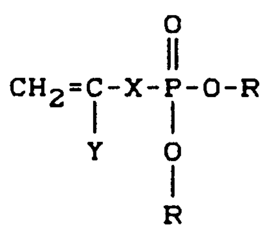

(I)

mit
Y = H, $CH_3$
X = Einfachbindung, $-CH_2-$
R = Aryl, Alkyl
b) Maleinsäureanhydrid
und
c) einer polymerisierbaren Verbindung mit zwei oder mehr Allyl- oder Methallylgruppen im Molekül.

EP 0 468 324 A1

Die Erfindung betrifft neue Polymerisate auf der Basis von ungesättigten Phosphonsäureestern mit hohem Phosphorgehalt, besonderer Flammbeständigkeit und Alterungsbeständigkeit.

Ungesättigte Phosphonsäurederivate sind als Co-Monomere zur Herstellung von Polymerisaten bekannt, allerdings ist ihre durch radikalische Polymerisation in die Polymerisate einpolymerisierbare Menge sehr begrenzt, so daß nur Copolymerisate mit relativ geringen Phosphorgehalten erzeugt werden können. Andererseits werden phosphorhaltige Polymerisate gebraucht, die nicht nur hohe Phosphorgehalte besitzen sondern auch abgestimmte Reaktivitäten und Polaritäten.

Es wurde gefunden, daß die Polymerisation bestimmer Monomer-Kombinationen Polymerisate mit hohem Phosphor-Gehalt ergibt und gleichzeitig zu einer neuen Klasse von reaktiven Maleinsäureanhydrid-Polymerisatenführt. Dies ist überda die einzelnen Monomeren a), b) und c) unter normalen Bedingungen der radikalischen Polymerisation nicht zu höhermolekularen Produkten homopolymerisieren oder bestenfalls vernetzte Produkte liefern (im Falle des Monomeren c); auch die Monomeren a) und b) sowie a) und c) zeigen keine Neigung zur Copolymerisation.

Gegenstand dieser Erfindung sind somit Copolymerisate aus

a) Phosphonsäurederivaten der Formel (I)

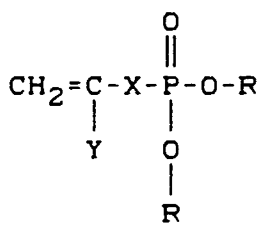

(I)

mit

Y = H, $CH_3$

X = Einfachbindung, $-CH_2-$

R = Aryl, Alkyl

b) Maleinsäureanhydrid

und

c) einer polymerisierbaren Verbindung mit zwei oder mehr Allyl- oder Methallylgruppen im Molekül.

Bevorzugte Polyphosphonsäurederivate a) sind Verbindungen der Formel (I) mit

X = $-CH_2-$

und

R = $C_1$-$C_8$-Alkyl- und $C_6$-$C_{12}$-Aryl-Reste, die gegebenenfalls mit O-, N-, Halogengruppen substituiert sein können.

Geeignete Reste R sind beispielsweise Phenyl, Naphthyl, halogensubstituiertes Phenyl, Methoxyphenyl, Ethoxyphenyl, Acetamidophenyl, Methyl, Ethyl, Propyl, Butyl, Hexyl, Chlorethyl.

Besonders bevorzugte Polymerisate werden erhalten, wenn als polymerisierbare Verbindung c) Triallylcyanurat oder Triallylisocyanurat genommen wird.

Das Molekulargewicht der erfindungsgemäßen Polymerisate kann stark variieren; erfindungsgemäße Polymerisate umfassen somit Oligomere, lösliche Polymerisate, verzweigte lösliche Polymerisate, teilvernetzte Polymerisate und hochvernetzte Polymerisate. Vernetzte Polymerisate erfordern besondere Polymerisationsführung (hoher Monomerumsatz bei der Polymerisation; hohe Konzentration der Monomeren, spezielle Temperaturführung, spezielle Initiatoren)und bestimmte Mengen c) oder die Mitverwendung üblicher vernetzender Monomerer, z.B. mehrfach ungesättigter, polymerisierbarer Verbindungen wie Divinylbenzol, Allylacrylat, Allylmethacrylat, Ethylendiamin-bis-acrylamid, Bis-acrylsäureester und -methacrylsäureester von C2-C6-Alkylendiolen (Ethylenglykol, Butylenglykol, Propylenglykol).

Zusätzlich zu a), b) und c) können weitere Vinylmonomere einpolymerisiert werden, vorzugsweise in Mengen bis zu 20 Gew.-%, bezogen auf die Gesamtmenge des resultierenden Polymeren; z.B. Styrole, $\alpha$-Methylstyrol, Acrylnitril, Methacrylnitril, Vinylacetat, Vinylpropionat, Vinylether, $C_1$-$C_8$-Acrylate, Maleinsäurehalbester, Maleinsäureimide, Diene (wie Butadien, Isopren, Chloropren), Vinylchlorid, Vinylidenchlorid,

Bevorzugte erfindungsgemäße Polymerisate enthalten bis 60 Gew.-% Monomereinheiten a) und wenigstens 40 Gew.-% an Monomereinheiten b) + c). Das Gewichtsverhältnis von b) : c) ist bevorzugt 1:20 bis 20:1.

Besonders bevorzugte Polymerisate enthalten 5-50 Gew.-% Monomereinheiten a) und 95-50 Gew.-% an

Monomereinheiten b) + c).

Die Polymerisate sind farblose, in Wasser unlösliche Feststoffe, die sich aber - wenn sie eine hinreichende Menge an Maleinsäureanhydrideinheiten enthalten und wenn sie unvernetzt sind - in Wasser, bevorzugt im alkalischen Milieu, auflösen lassen, wobei - je nach Molekulargewichtsgröße der Polymeren - viskose wäßrige Lösungen gebildet werden können.

Die erfindungsgemäßen Polymerisate können durch radikalische Copolymerisation der Monomeren a), b), c) bei 20 bis 100 °C hergestellt werden. Bevorzugte Polymerisationsverfahren sind die kontinuierliche, halbkontinuierliche oder diskontinuierliche Lösungs- und Masse-Polymerisation. Für die Lösungs-Polymerisation verwendet man vorzugsweise inerte aromatische Kohlenwasserstoffe wie Benzol, Toluol, Ethylbenzol. Die Polymerisation kann mit üblichen Radikalbildnern wie Peroxiden, Perestern, Hydroperoxiden, Azoverbindungen, bevorzugt mit Azoisobuttersäuredinitrilen bei Temperaturen von vorzugsweise 60 bis 90 °C initiiert werden.

Bevorzugt wird der Initiator in Mengen von 0,1 bis 1 Gew.-%, bezogen auf die zu polymerisierenden Monomeren eingesetzt. Umsatz und Molekulargewicht der Polymerisate hängen auch von der Konzentration der Monomeren im Polymerisationsansatz ab, bevorzugt bei hohen Konzentrationen an Monomeren, z.B. bei Gewichtsverhältnissen Monomere zu Lösungsmittel (Medium) von 40 zu 60 bis 100 zu 0. So wird beispielsweise der Polymerisationsumsatz mit steigender Monomerkonzentration höher, ebenso die Molekulargewichte des Polymerisats und der Grad der Vernetzung.

Die Polymerisate können nach bekannten Methoden wie Ausfällung, Ausdampfung in entsprechenden Aggregaten aus dem Reaktivgemisch genommen werden. Sie sind Feststoffe mit Erweichungstemperatur oberhalb der Zimmertemperatur und können z.B. als Verdickungsmittel, Viskositätsverbesserer verwendet werden.

Durch (Teil)Hydrolyse der Anhydrid-Strukturen kann die Polarität und somit die Verträglichkeit weitgehend variiert werden. Damit eignen sich die erfindungsgemäßen Polymerisate insbesondere für den Einsatz als Zusätze zu Polymermischungen (z.B. Anstrichmittel und Kunststoffe). Hervorzuheben sind u.a. ihre überraschenden Alterungs- und Farbhalteeigenschaften. Im Vergleich zu üblichen niedermolekularen Additiven für Chemiewerkstoffe wie Phosphorverbindungen (z.B. Phosphorsäureester) sind die erfindungsgemäßen Polymerisate beständiger; sie eignen sich somit besonders für thermisch hochbelastete Produkte.

## Beispiele

### Beispiel 1

Eine Mischung aus
17,8 Gew.-Teilen Allylphosphonsäurediethylester
9,8 Gew.-Teilen Maleinsäureanhydrid
8,3 Gew.-Teilen Triallylcyanurat
30 Gew.-Teilen Ethylbenzol
1 Gew.-Teil Azoisobuttersäurenitril
wird bei 75 °C 20 Stunden unter Rühren polymerisiert. Nach 25 Stunden wird das gebildete Polymerisat durch Ausfällen mit Isopropanol isoliert, gewaschen und zu einem Pulver getrocknet.

Ausbeute an Polymerisat: 75 Gew.-%; Phosphorgehalt des Polymerisats: 7,1 Gew.-%; [$\eta$], gemessen in Dimethylformamid bei 20 °C: 0,11 dl/g.

### Beispiel 2

Eine Mischung aus
17,8 Gew.-Teilen Allylphosphonsäurediethylester
9,8 Gew.-Teilen Maleinsäureanhydrid
8,3 Gew.-Teilen Triallylcyanurat
30 Gew.-Teilen Ethylbenzol
1,5 Gew.-Teilen Azoisobuttersäurenitril
wird wie in Beispiel 1 polymerisiert.

Ausbeute an Polymerisat: 83 Gew.-%; Phosphorgehalt des Polymerisats: 8,2 Gew.-%; [$\eta$], gemessen in Dimethylformamid bei 20 °C, 0,10 dl/g.

### Beispiel 3

Das in Wasser unlösliche Polymerisat des Beispiels 1 wird in Wasser eingerührt (1 Gew.-Teil auf 20 Gew.-Teile Wasser). Durch Zugabe von 1n-Natronlauge läßt sich das Polymerisat hydrolysieren; es bildet sich eine viskose klare Polymerisatlösung.

Beispiel 4 (Vergleich)

Eine Mischung aus
17,8 Gew.-Teilen Allylphosphonsäurediethylester
9,8 Gew.-Teilen Maleinsäureanhydrid
30 Gew.-Teilen Ethylbenzol
1 Gew.-Teil Azoisobuttersäurenitril
wird analog Beispiel 1 umgesetzt. Es bildet sich kein Polymerisat.

Beispiel 5 (Vergleich)

Eine Mischung aus
17,8 Gew.-Teilen Allylphosphonsäurediethylester
8,3 Gew.-Teilen Triallylcyanurat
30 Gew.-Teilen Ethylbenzol
1 Gew.-Teil Azoisobuttersäurenitril
wird analog Beispiel 1 umgesetzt. Es bildet sich kein Polymerisat.

Beispiel 6

Eine Mischung aus
19,2 Gew.-Teilen Methallylphosphonsäurediethylester
9,8 Gew.-Teilen Maleinsäureanhydrid
8,3 Gew.-Teilen Triallylcyanurat
30 Gew.-Teilen Ethylbenzol
1 Gew.-Teil Azoisobuttersäurenitril
wird analog Beispiel 1 polymerisiert.

Ausbeute an Polymerisat: 80 Gew.-%.
Phosphorgehalt des Polymerisats: 8,1 Gew.-%;
[$\eta$] gemessen in Dimethylformamid bei 20 °C: 0,15 dl/g.

Beispiel 7

Eine Mischung aus
17,8 Gew.-Teilen Allylphosphonsäurediethylester
9,0 Gew.-Teilen Maleinsäureanhydrid
9,1 Gew.-Teilen Triallylcyanurat
20 Gew.-Teilen Ethylbenzol
1 Gew.-Teil Azoisobuttersäurenitril
wird bei 75 °C 20 Stunden unter Rühren polymerisiert. Nach 25 Stunden wird mit 0,5 Gew.-Teile Azoisobuttersäurenitril nachaktiviert, die Temperatur auf 80 bis 85 °C gebracht und in einem Hochviskos-Rühraggregat weiter polymerisiert. Nach 10 Stunden hat sich ein Gel gebildet. Das teilvernetzte Polymerisat besitzt einen Gelgehalt (gemessen in Dimethylformamid) von 35 Gew.-%.

**Patentansprüche**

**1.** Copolymerisat aus
a) einem Phosphonsäurederivat der Formel (I)

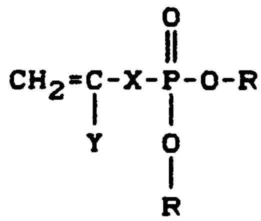

(I)

worin

Y = H, $CH_3$

X = Einfachbindung, $-CH_2-$

R = Aryl, Alkyl

b) Maleinsäureanhydrid

und

c) einer polymerisierbaren Verbindung mit zwei oder mehr Allyl- oder Methallylgruppen im Molekül.

**2.** Copolymerisate nach Anspruch 1, in denen c) Triallylcyanurat oder Triallylisocyanurat ist.

**3.** Verfahren zur Herstellung von Polymerisaten nach Anspruch 1, dadurch gekennzeichnet, daß man die Monomeren a), b) und c) in Masse oder in Lösung radikalisch terpolymerisiert bei einem Gewichtsverhältnis Summe der eingesetzten Monomeren a) + b) + c) zu Lösungsmittel (Medium) von 40 zu 60 bis 100 zu 0.

Europäisches Patentamt

# EUROPÄISCHER RECHERCHENBERICHT

Nummer der Anmeldung

**EP 91 11 1712**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 265 783 (STAUFFER CHEMICAL)<br>* Seite 1, Zeile 21 - Seite 3, Zeile 34 * *<br>– – – | 1,3 | C 08 F 230/02<br>C 08 F 222/06 |
| A | US-A-2 636 027 (COOVER ET AL.)<br>* das ganze Dokument * *<br>– – – | 1 | |
| A | US-A-3 062 774 (D' ALELIO)<br>* Spalte 3, Zeile 45 - Zeile 56 * * * Spalte 6, Zeile 58 - Spalte 7, Zeile 69 * *<br>– – – – – | 2 | |

RECHERCHIERTE SACHGEBIETE (Int. Cl.5)

C 08 F

Der vorliegende Recherchenbericht wurde für alle Patentansprüche erstellt

| Recherchenort | Abschlußdatum der Recherche | Prüfer |
|---|---|---|
| Den Haag | 24 Oktober 91 | ANDRIOLLO G.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument